# EUROPEAN PATENT APPLICATION

(11) **EP 4 640 500 A1**
(43) Date of publication of application: **29.10.2025**
(21) Application number: 23906456.1
(22) Date of filing: 24.10.2023
(51) Int. Cl.: B60S 1/40

(54) **WIPER BLADE AND CLIP**

(30) Priority: 23.12.2022 JP 2022206724
(71) Applicant: Denso Wiper Systems, Inc., Kosai-shi Shizuoka 431-0493 (JP)
(72) Inventor: SATO, Masahiko, Kazo-shi, Saitama 347-8585 (JP); KOMINE, Takumi, Kazo-shi, Saitama 347-8585 (JP)
(74) Representative: Westphal, Mussgnug & Partner Patentanwälte mbB
(86) International application number: PCT/JP2023/038383
(87) International publication number: WO 2024/135081

(57) **Abstract**

This wiper blade comprises a clip (40) and a blade body (60). The clip (40) is fixed to a wiper arm (20). The wiper arm (20) has an upper plate part (21), a lateral plate part (22) extending downward from both sides of the upper plate part in the width direction, a claw part (23) extending inward in the width direction from the lower end of the lateral plate part, and a through-hole (24) provided in the upper plate part. The blade body has a blade rubber, and a connecting part that is fixed to the blade rubber and is connected so as to be turnable relative to the clip. The clip has an upper wall (41), a lateral wall (42), an engaging projection (43), a flexible lateral wall (44), and an engaging part (45). The lateral wall extends downward from both sides of the upper wall in the width direction. The engaging projection protrudes upward from the upper wall and cannot be elastically deformed in the vertical direction in which the engaging projection engages the through-hole. The flexible lateral wall is provided to at least a portion of the lateral wall and can be elastically deformed in the width direction. The engaging part is provided to the flexible lateral wall and can engage with the upper surface of the claw part.

## Description

### TECHNICAL FIELD

The present disclosure relates to a wiper blade and a clip.

### BACKGROUND ART

A known wiper blade includes a clip that is fixed to a wiper arm and a blade body that is connected to the clip in a pivotal manner. Patent Literature 1 discloses a wiper arm that includes an upper plate having a through hole. A clip includes an upper wall, and a fitting projection that projects upward from the upper wall is fitted into the through hole. The fitting projection is elastically deformable in the vertical direction. The clip that is attached can be detached from the wiper arm by pushing down the fitting projection.

### CITATION LIST

### Patent Literature (Non-Patent Literature)

Patent Literature 1: PCT Publication No. 2006/013152

### SUMMARY OF INVENTION

### Technical Problem

However, the wiper blade mentioned above may inadvertently become detached from the wiper arm due to the fitting projection of the clip, which is elastically deformable in the vertical direction. The fitting projection may be detached from the through hole if an external force acting to push down the fitting projection is applied such as when an impact by foreign matter occurs as the vehicle travels or when washing the vehicle with a car wash machine. Furthermore, for example, if the wiper is driven in a state in which the fitting projection is not completely fitted into the through hole, the wiper blade may become detached when the clip is moved in the longitudinal direction relative to the wiper arm.

Accordingly, it is an objective of the present disclosure to provide a wiper blade and a clip that obviate inadvertent detachment from a wiper arm.

### Solution to Problem

A wiper blade in accordance with one general aspect includes a clip and a blade body. The clip fixed to the wiper arm includes an upper plate, a side plate, a tab, and a through hole. The side plate extends downward from each of two lateral sides of the upper plate. The tab extends from a lower end of the side plate in a laterally inward direction. The through hole extends through the upper plate. The blade body includes a rubber blade and a joint that is fixed to the rubber blade and coupled to the clip in a pivotal manner. The clip includes an upper wall, a side wall, a fitting projection, a flexible side wall, and an engaging portion. The side wall extends downward from each of two lateral sides of the upper wall. The fitting projection projects upward from the upper wall, is fitted into the through hole, and is not elastically deformable in a vertical direction. The flexible side wall is arranged on at least one part of the side wall and is elastically deformable in a lateral direction. The engaging portion is arranged on the flexible side wall and is engageable with an upper surface of the tab.

With the above structure, when the fitting projection, which projects upward from the upper wall, is fitted into the through hole of the wiper arm, displacement of the clip relative to the wiper arm in the longitudinal direction is restricted. Furthermore, the engaging portion, which is arranged on the flexible side wall, is engaged with the upper wall of the tab, displacement of the clip relative to the wiper arm in the vertical direction is restricted. Further, the flexible side wall is elastically deformable in the lateral direction. Thus, elastic deformation allows the engaging portion of the flexible side wall to be disengaged from the upper surface of the tab. Therefore, elastic deformation of the flexible side wall allows for attachment and detachment of the clip to and from the wiper arm in the vertical direction

Further, the fitting projection is not elastically deformable in the vertical direction. Thus, the fitting projection will not be detached from the through hole by, for example, simply applying external force acting to push down the fitting projection. If, for example, the flexible side wall is elastically deformed and the wiper arm is in a non-lock-back state, which is the state where the rubber blade is pressed against a wiping surface, displacement of the clip relative to the wiper arm in the vertical direction will be restricted. Furthermore, when the wiper arm is in a lock-back state, elastic deformation of the flexible side wall will disengage the engaging portion from the upper surface of the tab and remove the fitting projection from the through hole. This restricts inadvertent removal of the wiper blade from the wiper arm.

A clip in accordance with another general aspect is fixed to a wiper arm including an upper plate, a side plate, a tab, and a through hole. The side plate extends downward from each of two lateral sides of the upper plate. The tab extends from a lower end of the side plate in a laterally inward direction. A through hole extends through the upper plate. The clip is coupled to a joint of a blade body in a pivotal manner. The clip includes an upper wall, a side wall that extends downward from each of the two lateral sides of the upper wall, a fitting projection that projects upward from the upper wall, is fitted into the through hole, and is not elastically deformable in a vertical direction, a flexible side wall arranged on at least one part of the side wall and being elastically deformable in a lateral direction, and an engaging portion arranged on the flexible side wall and being engageable with an upper surface of the tab.

With the above structure, in the same manner as the above wiper blade, inadvertent removal of the clip from the wiper arm can be restricted.

### BRIEF DESCRIPTION OF DRAWINGS

Fig. 1 is a partial perspective view of a vehicle wiper in accordance with an embodiment.
Fig. 2 is a partial exploded perspective view of a wiper arm and a clip in the embodiment.
Fig. 3 is a partial exploded side view of a wiper blade in the embodiment.
Fig. 4 is a cross-sectional view taken along line 4-4 in Fig. 3.
Fig. 5 is a cross-sectional view taken along line 5-5 in Fig. 1.
Fig. 6 is a cross-sectional view taken along line 6-6 in Fig. 3.
Fig. 7 is a partial schematic cross-sectional view of a flexible side wall and a side plate in the embodiment.
Fig. 8 is a partial side view of the wiper blade in the embodiment.
Fig. 9 is a partial side view of the wiper blade in the embodiment.
Fig. 10 is a partial exploded perspective view of the wiper arm and the clip in the embodiment.
Fig. 11 is a partial exploded side view of the wiper blade in the embodiment.
Fig. 12 is a cross-sectional view taken along line 12-12 Fig. 11.
Fig. 13 is a cross-sectional view taken along line 13-13 Fig. 11.
Fig. 14 is a partial schematic cross-sectional view of the flexible side wall and the side plate portion in the embodiment.
Fig. 15 is a partial perspective view of the clip in the embodiment.
Fig. 16 is a partial perspective view of the clip in the embodiment.
Fig. 17 is a partial perspective view of the clip in the embodiment.

### DESCRIPTION OF EMBODIMENTS

A wiper blade in accordance with an embodiment will now be described with reference to the drawings. The drawings may illustrate elements in an exaggerated or simplified manner for explanatory purposes. Further, elements have not necessarily been drawn to scale.

### Structure of Vehicle Wiper 10

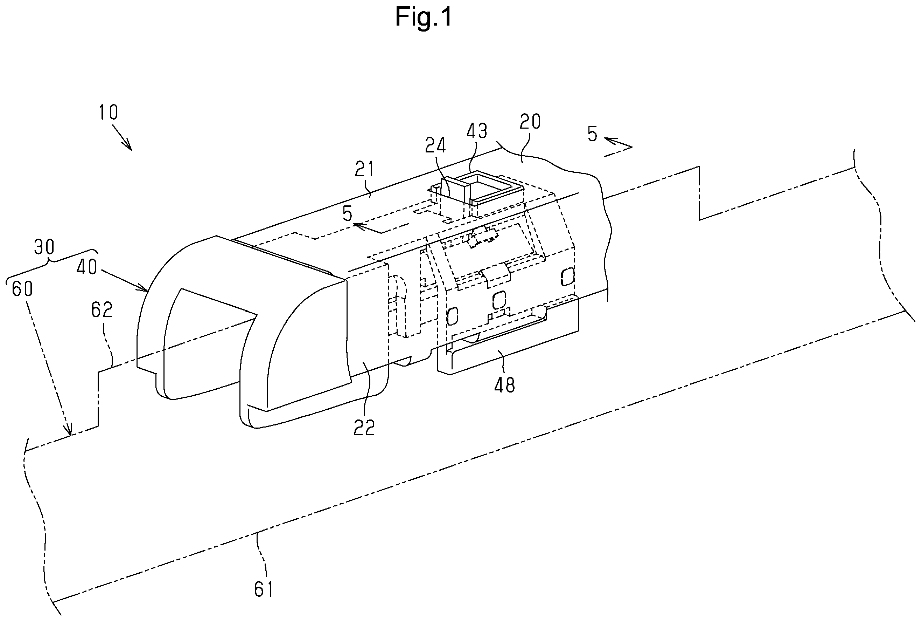

As shown in Fig. 1, a vehicle wiper 10 includes a wiper arm 20 and a wiper blade 30 that is connected to the distal end of the wiper arm 20. The vehicle wiper 10 is used to wipe away rain or the like from a wiping surface such as a windshield. The wiper arm 20 includes a basal end fixed to a pivot shaft (not shown) that is pivoted in a reciprocating manner by the drive force of a wiper motor. The pivotal reciprocation of the pivot shaft swings the vehicle wiper 10 back and forth. In addition, the wiper arm 20 includes a lock-back mechanism and a biasing mechanism (not shown). In a non-lock-back state, the biasing mechanism biases the distal end of the wiper arm 20 toward the wiping surface. In the present embodiment, the direction extending toward the wiping surface of the vehicle wiper 10 in the non-lock-back state is referred to as the downward direction, and the direction extending away from the wiping surface is referred to as the upward direction. Further, in the present embodiment, the direction parallel to the longitudinal direction of the vehicle wiper 10 will simply be referred to as the longitudinal direction, and the direction orthogonal to the vertical direction and to the longitudinal direction will simply be referred to as the lateral direction.

### Structure of Wiper Arm 20

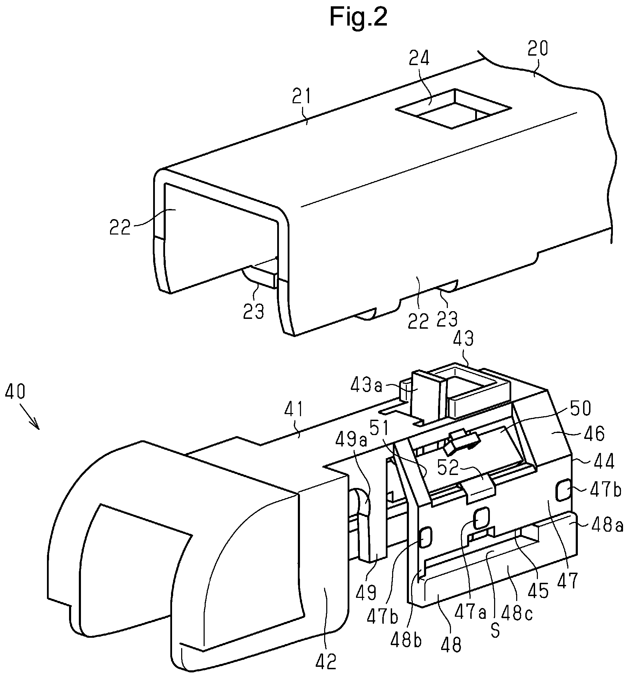

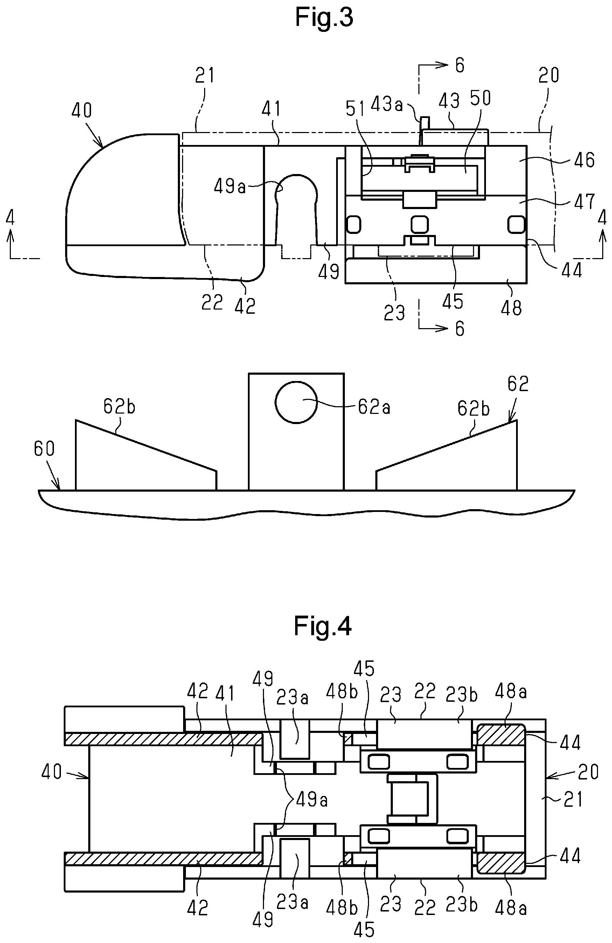

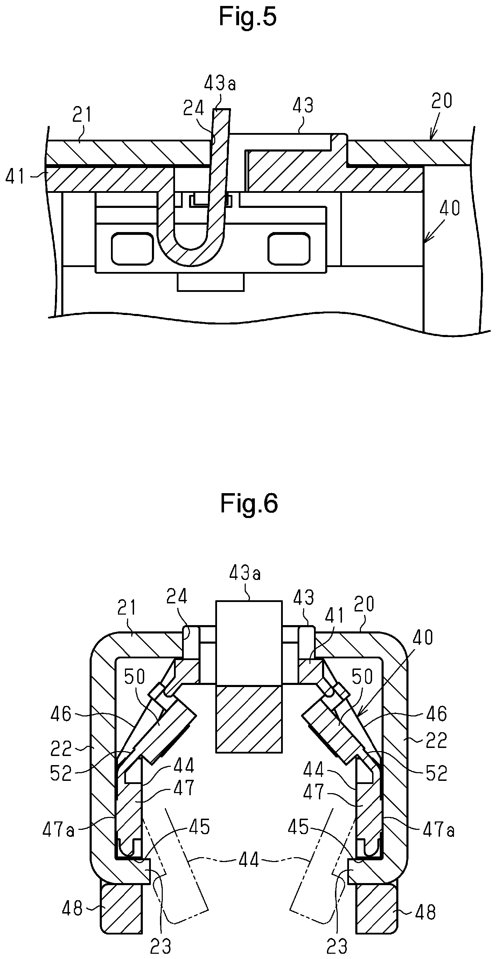

As shown in Figs. 1 to 4, the distal end of the wiper arm 20 includes an upper plate 21, and a side plate 22 that extends downward from each of the two lateral sides of the upper plate 21 in the lateral direction. Furthermore, as shown in Figs. 2 and 6, the wiper arm 20 includes a tab 23 that extends from the lower portion of each side plate 22 in the laterally inward direction. Additionally, as shown in Fig. 4, each tab 23 of the wiper arm 20 includes a distal tab 23a that is arranged at the distal side of the tab 23 in the longitudinal direction, and a basal tab 23b that is arranged at the basal side of the tab 23 in the longitudinal direction. The distal tab 23a projects over a greater amount in the laterally inward direction than the basal tab 23b. Moreover, a through hole 24 is formed having a rectangular shape as viewed in the hole extending direction.

### Structure of Wiper Blade 30

As shown in Fig. 1, the wiper blade 30 includes a clip 40 that is fixed to the distal end of the wiper arm 20, and a blade body 60 that is connected to the clip 40 in a pivotal manner.

The blade body 60 includes an elongated rubber blade 61 and a joint 62. The rubber blade 61 contacts the wiping surface. The joint 62 is arranged in the longitudinally central part of the rubber blade 61 and is connected to the clip 40 in a pivotal manner. Additionally, the longitudinally central part of the rubber blade 61 is not limited to the longitudinally center position. The joint 62 may be fixed to the rubber blade 61 at any longitudinal position. Further, the blade body 60 may be of any type as long as the rubber blade 61 and the joint 62 are included. For example, the blade body 60 may be of a bracket-lever type including multiples levers. Furthermore, the blade body 60 may be of a type including a leaf spring-like backings, which extend along the upper surface of the rubber blade 61, and a case which holds the leaf spring-like backings. Moreover, the blade body 60 may be of a type including a fin that converts the flow of air at one lateral side of the case into force directed toward the wiping surface.

As shown in Fig. 2, the clip 40 includes an upper wall 41, a side wall 42 that extends downward from each of the two lateral sides of the upper wall 41 in the laterally inward direction, and a fitting projection 43 that projects upward from the upper wall 41. The fitting projection 43 is fitted in the through hole 24 and is not elastically deformable in the vertical direction. Furthermore, each side wall 42 of the clip 40 includes a flexible side wall 44 that is elastically deformable in the lateral direction, and an engaging portion 45 that is arranged on the flexible side wall 44 and is engageable with an upper surface of the corresponding tab 23. The clip 40 is a resin molded component.

As shown in Figs. 2 and 5, the fitting projection 43 includes a flexible tab 43a that contacts with and presses an inner wall surface of the through hole 24 in the longitudinal direction of the wiper arm 20. The flexible tab 43a is a part of the fitting projection 43. The flexible tab 43a first extends downward from the upper wall 41 and is then curved and projected upward out of the upper wall 41 to form a part of the fitting projection 43. The flexible tab 43a is flexible in the longitudinal direction of the wiper arm 20. Moreover, in a state in which the fitting projection 43 is fitted into the through hole 24, the flexible tab 43a is set to constantly contact with and press the inner wall surface of the through hole 24.

The flexible side wall 44 is arranged at the basal end of the side wall 42 in the longitudinal direction. The flexible side wall 44 includes an inclined portion 46 that is inclined so that the clip width widens downward from the upper wall 41. Furthermore, the flexible side wall 44 includes a flexible side wall base 47 that extends straight downward from a lower end of the inclined portion 46. The engaging portion 45 is defined by the longitudinally central part of a lower surface of the flexible side wall base 47. The engaging portion 45 is engageable with the upper surface of the basal tab 23b of the corresponding tab 23.

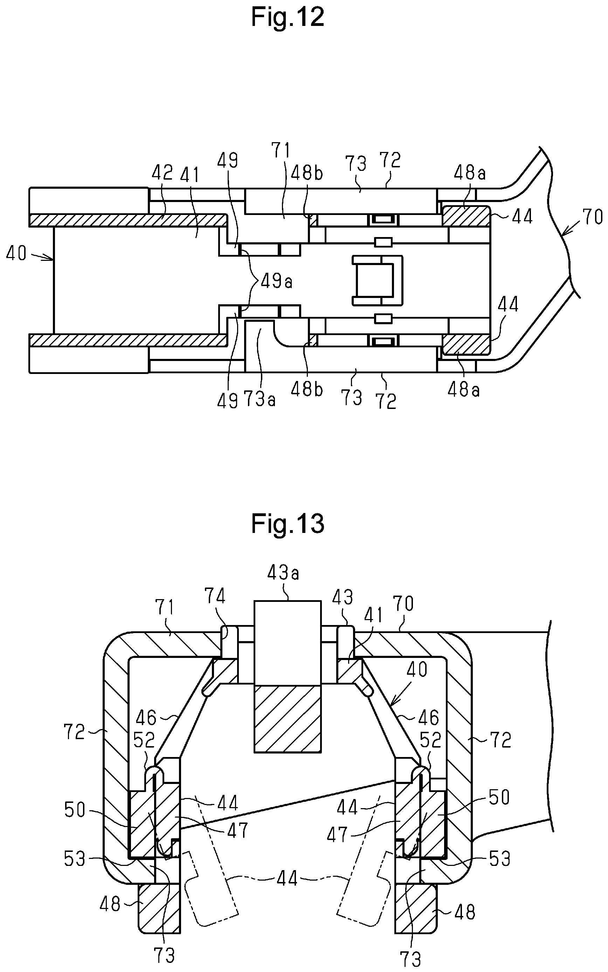

As shown in Figs. 1 and 2, the flexible side wall 44 includes an operating portion 48 that projects downward from the side plate 22 in a state in which the clip 40 is fixed to the wiper arm 20. The operating portion 48 is spaced apart by a gap S from the longitudinally central part of the flexible side wall base 47. The operating portion 48 is connected to two longitudinal ends of the lower surface of the flexible side wall base 47. More specifically, the operating portion 48 includes a first extending portion 48a that extends downward from the longitudinally basal end of the flexible side wall base 47, a second extending portion 48b that extends downward from the longitudinally distal end of the flexible side wall base 47, and a connecting portion 48c that connects the first extending portion 48a and the second extending portion 48b. Furthermore, the first extending portion 48a and the connecting portion 48c protrude laterally outward from the flexible side wall base 47. The flexible side wall 44 is elastically deformed laterally inward when, for example, one squeezes the two operating portions 48 (refer to double-dashed lines in Figs. 6 and 13).

As shown in Fig. 6, in a state in which the clip 40 is fixed to the wiper arm 20, the flexible side wall 44 is set to contact with and press the corresponding side plate 22. More specifically, as shown in Fig. 2, the flexible side wall base 47 includes a central protrusion 47a and end protrusions 47b. The central protrusion 47a slightly protrudes laterally outward from the longitudinally central part of the flexible side wall base 47. The end protrusions 47b slightly protrude laterally outward from the two longitudinal ends of the flexible side wall base 47.

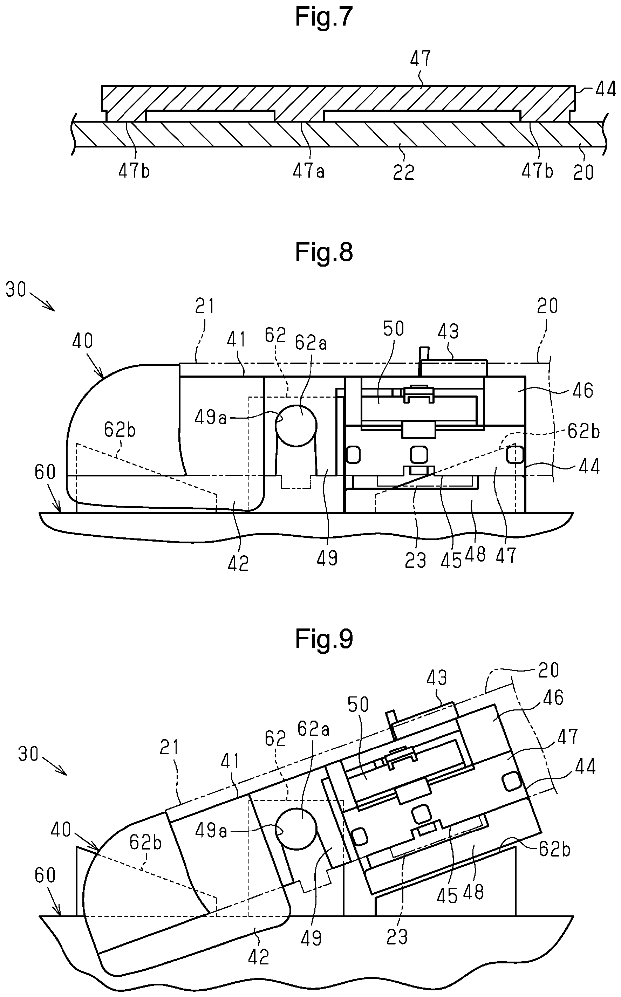

As shown in Fig. 7, in a state in which the clip 40 is fixed to the wiper arm 20, the flexible side wall 44 is set to locally contact with and press the side plate 22 at three locations, namely, at the central protrusion 47a and at the two end protrusions 47b.

As shown in Fig. 2, the longitudinally central part of the side wall 42 includes a shaft support 49. The shaft support 49 is arranged laterally inward from the flexible side wall base 47. Thus, as shown in Fig. 4, the distal tab 23a of the tab 23 does not contact the shaft support 49. The shaft support 49 includes a shaft support groove 49a that extends upward from the lower end.

As shown in Figs. 8 and 9, the joint 62 of the blade body 60 is coupled to the shaft support 49 in a pivotal manner. More specifically, the joint 62 includes the shaft 62a that acts as the pivot center when fitted to the shaft support groove 49a of the shaft support 49.

The joint 62 includes deformation restricting portions 62b that restrict deformation of the flexible side walls 44 when the wiper arm 20 is in the non-lock-back state and a pivot angle of the clip 40 is a wiping pivot angle. More specifically, when the rubber blade 61 is in contact with the wiping surface and the wiper arm 20 is in the non-lock-back state, the deformation restricting portions 62b are inserted between the two flexible side walls 44. This restricts laterally inward elastic deformation of the flexible side walls 44 (refer to Fig. 8). Thus, when the wiper arm 20 is in the non-lock-back state, the wiper arm 20 can be prevented from being detached from the clip 40.

Further, as shown in Fig. 9, the deformation restricting portion 62b allows for elastic deformation of the flexible side walls 44 when the pivot angle of the clip 40 is a non-wiping pivot angle, which is an angle excluded from the range of the wiping pivot angle. More specifically, when the wiper arm 20 is greatly inclined relative to the blade body 60 in the lock-back state, separation of the deformation restricting portions 62b from between the flexible side walls 44 allows laterally inward elastic deformation of the two flexible side walls 44 to be elastically deformed. Thus, the clip 40 can be detached from and attached to the wiper arm 20 when the wiper arm 20 is in the lock-back state.

The joint 62 is shaped so that its two ends in the longitudinal direction of the blade body 60 are symmetrical with respect to the pivot center of the clip 40, that is, about the shaft 62a. More specifically, the joint 62 includes the deformation restricting portions 62b that are arranged on the its two ends in the longitudinal direction of the blade body 60 about the shaft 62a. Thus, the clip 40 can be coupled to the blade body 60 in a reversible manner in the longitudinal direction.

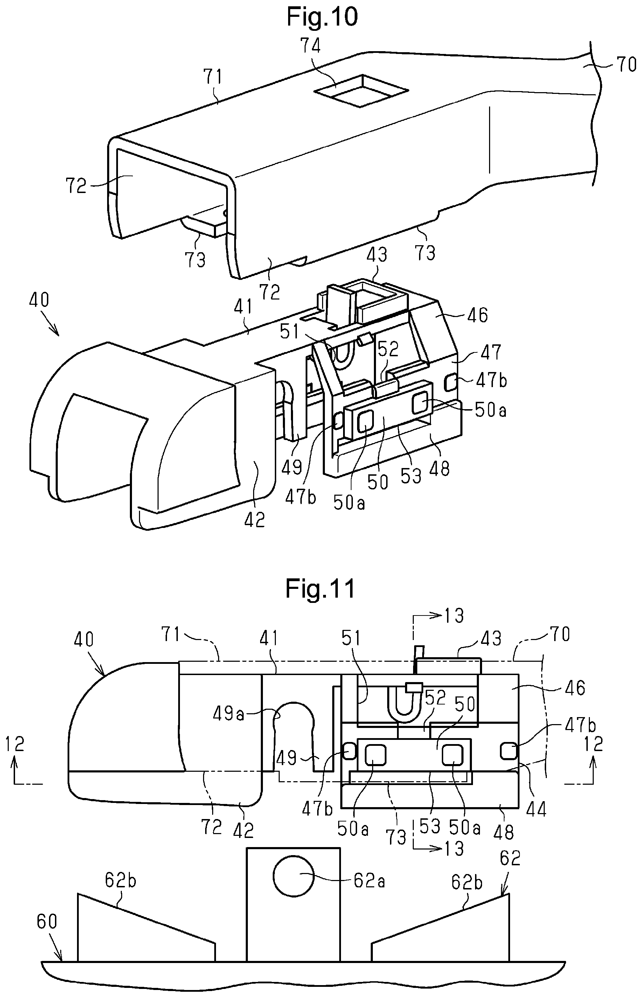

Further, as shown in Fig. 10, the clip 40 of the present embodiment can be fixed to a wiper arm 70 that is wider than the wiper arm 20. Therefore, the clip 40 is deformed in a first state that corresponds to the wiper arm 20 and a second state that corresponds to the wiper arm 70, which is wider than the wiper arm 20.

### Structure of Wiper Arm 70

As shown in Figs. 10 to 13, the distal end of the wiper arm 70 includes an upper plate 71 and a side plate 72 that extends downward from each of the two lateral sides of the upper plate 71. The width of the upper plate 71 is greater than the upper plate 21 of the wiper arm 20. Moreover, as shown in Figs. 10 and 13, the wiper arm 70 includes a tab 73 that extends laterally inward from the lower end of each side plate 72 and a through hole 74 that extends through the upper plate 71. As shown in Fig. 12, the longitudinally distal side of one of the lateral tabs 73 of the wiper arm 70 includes a distal protrusion 73a that greatly protrudes laterally inward. Moreover, the through hole 74 is identical in shape to the through hole 24 of the wiper arm 20.

### Structure of Adjustment Plate 50 of Flexible Side Wall 44

Each flexible side wall 44 includes an adjustment plate 50 arranged laterally outward from the flexible side wall base 47 in the second state thereby defining a laterally outer wall surface of the flexible side wall 44. In the first state, the flexible side wall base 47 defines the laterally outer wall surface of the flexible side wall 44.

More specifically, as shown in Fig. 2, the clip 40 includes a pocket 51 that receives the adjustment plate 50 in the first state. The pocket 51 is arranged in the longitudinally central part of the inclined portion 46. The pocket 51 extends through the inclined portion 46 to allow the adjustment plate 50 to be received.

The adjustment plate 50 is arranged on the lower end of the pocket 51, which is the upper end of the flexible side wall base 47, with a thin hinge 52 located in between. The adjustment plate 50 has the form of a rectangular plate including a long side coupled to the hinge 52. Furthermore, the adjustment plate 50 is pivoted about the hinge 52 in the first state to be arranged at the laterally outer side of the flexible side wall base 47 in the second state (refer to Fig. 10).

As shown in Fig. 13, in the second state, the adjustment plate 50 includes a lower surface defining an engaging portion 53 that is engageable with the upper surface of the corresponding tab 73 in the clip 40. As shown in Fig. 12, the shaft support 49 is arranged laterally inward from the flexible side wall base 47 so that the distal protrusion 73a of the tab 73 does not contact the shaft support 49.

As shown in Fig. 10, the adjustment plate 50 is shorter in the longitudinal direction than the flexible side wall base 47 and includes an adjustment plate protrusion 50a protruding laterally outward from each of the two longitudinal ends. In the second state, the end protrusions 47b of the flexible side wall base 47 are located at positions that do not overlap with the adjustment plate 50.

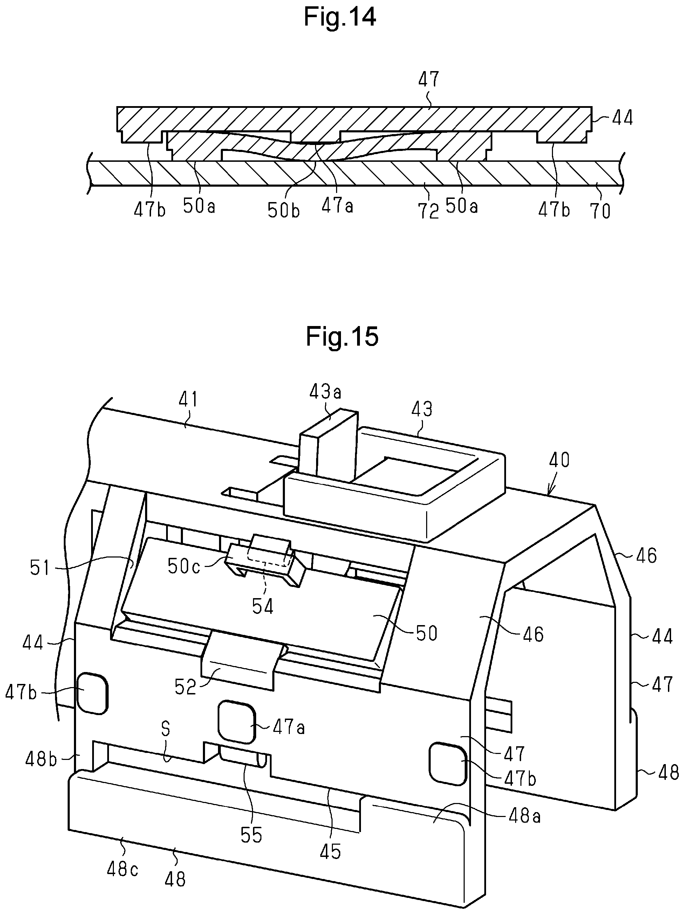

As shown in Fig. 14, in the second state, the flexible side wall 44 is set to locally contact with and press the side plate 72 at three locations in the longitudinal direction, namely, at a longitudinally central portion 50b, which is where the adjustment plate 50 is flexed laterally outward by the central protrusion 47a, and at the two adjustment plate protrusions 50a of the adjustment plate 50.

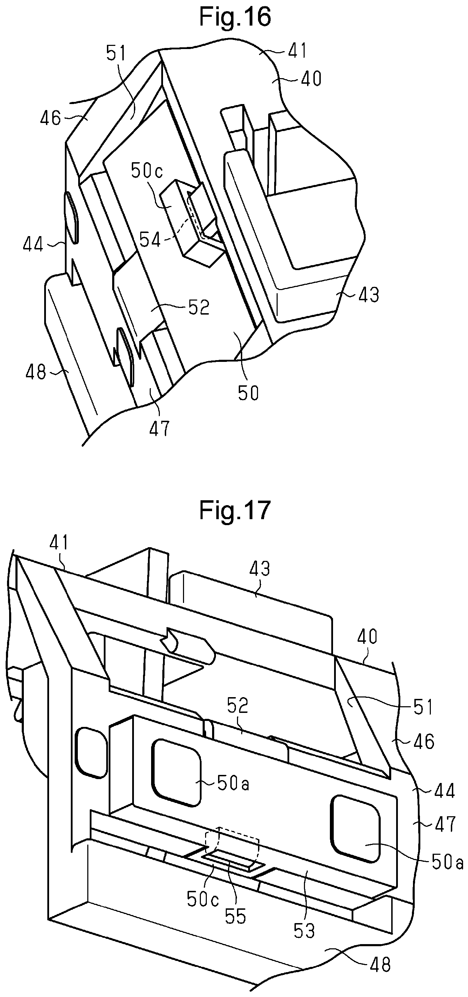

As shown in Figs. 15 and 16, the clip 40 includes a first holding portion 54 that holds the adjustment plate 50 in position in the first state. The first holding portion 54 projects from the upper wall 41.

As shown in Figs. 15 and 17, the clip 40 includes a second holding portion 55 that holds the adjustment plate 50 in position in the second state. The second holding portion 55 projects from a recess of the engaging portion 45.

The adjustment plate 50 includes a held portion 50c on the opposite side of where the hinge 52 is located. The held portion 50c is U-shaped and projects laterally outward in the first state. In the first state, the first holding portion 54 is fitted to the held portion 50c to hold the adjustment plate 50 in position. In the second state, the second holding portion 55 is fitted to the held portion 50c to hold the adjustment plate 50 in position.

The operation of the wiper blade 30 will now be described.

The wiper arms 20 and 70 in the lock-back state allow a user to attach and detach the clip 40 to and from the wiper arms 20 and 70 by squeezing the two operating portions 48 and deforming the flexible side walls 44 laterally inward. When the adjustment plate 50 is held by the first holding portion 54, the clip 40 can be fixed to the wiper arm 20 that has a smaller width. When the adjustment plate 50 is held by the second holding portion 55, the clip 40 can be fixed to the wiper arm 70 that has a larger width.

The advantages of the above embodiment will now be described
(1) When the fitting projection 43, which projects upward from the upper wall 41, is fitted into the through hole 24 of the wiper arm 20 or the through hole 74 of the wiper arm 70, displacement of the clip 40 relative to the wiper arms 20 and 70 in the longitudinal direction is restricted. When the engaging portions 45 and 53, which are arranged on the flexible side walls 44, are engaged with the upper walls of the tabs 23 and 73 of the wiper arms 20 and 70 respectively, displacement of the clip 40 relative to the wiper arms 20 and 70 in the vertical direction is restricted. Further, the flexible side walls 44 are elastically deformable in the lateral direction. Thus, elastic deformation allows the engaging portions 45 and 53 of the flexible side walls 44 to be disengaged from the upper surfaces of the tabs 23 and 73. Further, elastic deformation of the flexible side walls 44 allow for attachment and detachment of the clip 40 to and from the wiper arms 20 and 70 in the vertical direction.

The fitting projection 43 is not elastically deformable in the vertical direction. Thus, the fitting projection 43 will not be detached from the through holes 24 and 74 by, for example, simply applying external force acting to push down the fitting projection 43. If, for example, the flexible side walls 44 are elastically deformed and the wiper arms 20 and 70 are in the non-lock-back state, which is the state where the rubber blade 61 is pressed against the wiping surface, displacement of the clip 40 relative to the wiper arms 20 and 70 in the vertical direction will be restricted. Thus, removal of the fitting projection 43 from the through holes 24 and 74 will be restricted. When the wiper arms 20 and 70 are in the lock-back state, elastic deformation of the flexible side walls 44 will disengage the engaging portions 45 and 53 from the upper surfaces of the tabs 23 and 73 respectively, and remove the fitting projection 43 from the through holes 24 and 74. This restricts inadvertent removal of the wiper blade 30 from the wiper arms 20 and 70.
(2) In a state in which the clip 40 is fixed to the wiper arms 20 and 70, the flexible side walls 44 include the operating portions 48 that project downward from the side plates 22 and 72. Thus, the flexible side walls 44 can readily be elastically deformed by squeezing the operating portions 48 without using a jig or the like. This allows the clip 40 to be readily attached to and detached from the wiper arms 20 and 70.
(3) The flexible side wall 44 includes the inclined portion 46 that is inclined to increase a clip width as the inclined portion extends downward. When attaching the clip 40 to the wiper arm 20, relative movement in the vertical direction allows the wiper arm 20 to elastically deform the flexible side walls 44. Thus, the clip 40 can be readily attached to the wiper arm 20.
(4) When the pivot angle of the joint 62 relative to the clip 40 corresponds to a wiping pivot angle of the wiper arms 20 and 70 in the non-lock-back state, the deformation restricting portions 62b restrict elastic deformation of the flexible side walls 44. When in the non-lock-back state, the engaging portions 45 and 53 do not become disengaged from the upper surfaces of the tabs 23 and 73 respectively. Thus, the clip 40 will not become detached from the wiper arms 20 and 70.

When the pivot angle of the clip 40 corresponds to a non-wiping pivot angle, which is an angle excluded from the range of the wiping pivot angle, the deformation restricting portion 62b allows for elastic deformation of the flexible side walls 44. Therefore, when the wiper arms 20 and 70 are in the lock-back state, the flexible side walls 44 are elastically deformed to attach and detach the clip 40 to and from the wiper arms 20 and 70.
(5) The fitting projection 43 includes the flexible tab 43a that contacts with and presses the wall surfaces of the through holes 24 and 74 of the wiper arms 20 and 70 in the longitudinal direction. This, for example, prevents the looseness of the clip 40 relative to the wiper arms 20 and 70 in the longitudinal direction.
(6) The flexible side wall 44 is set to contact with and press the corresponding side plates 22 and 72. This limits loosening of the clip 40 from the wiper arms 20 and 70 in the longitudinal direction. In the present embodiment, in each of the first and second states, the flexible side walls 44 are set to contact with and press the side plates 22 and 72 in each state. This limits loosening of the clip 40 from the wiper arms 20 and 70 in the longitudinal direction.
(7) The joint 62 has two sides in the longitudinal direction of the blade body 60, the two sides being symmetrical with respect to the pivot center of the clip 40. Thus, the joint 62 can be coupled to the clip 40 in a reversible manner in the longitudinal direction of the blade body 60. This allows for application to any blade body 60 regardless of the direction in which it is attached to the vehicle. For example, a fin, which converts the flow of air at one lateral side of the blade body 60 into force directed toward the wiping surface, determines the direction in which the blade body 60 is attached to the vehicle. In other words, the clip 40 may be applied to right-hand and left-hand drive vehicles.
(8) Each flexible side wall 44 includes the adjustment plate 50, which defines the laterally outer wall surface of the flexible side wall 44 in the first state, and the flexible side wall base 47, which defines the laterally outer wall surface of the flexible side wall 44 in the second state. Thus, the clip 40 can be fixed to the two wiper arms 20 and 70, which have different widths.
(9) The clip 40 includes the pocket 51, which receives the adjustment plate 50 in the first state. Therefore, for example, when fixing the clip 40 to the wiper arm 20 in the first state, there is no need to cut off the adjustment plate 50. As a result, after being fixed to the wiper arm 20, which has a small width, the clip 40 can be fixed again to the wiper arm 70, which has a large width, and be reused.
(10) The clip 40 includes the first holding portion 54, which holds the adjustment plate 50 in position in the first state. This avoids a situation in which, for example, the adjustment plate 50 becomes loose in the first state, and thus keeps parts tightly assembled together.
(11) The clip 40 includes the second holding portion 55, which holds the adjustment plate 50 in position in the second state. This avoids a situation in which, for example, the adjustment plate 50 becomes loose in the first state and thus keeps parts tightly assembled together.
(12) In the first state, the central protrusion 47a and the two end protrusions 47b are set to contact with and press the side plate 22. Therefore, the flexible side walls 44 locally contact with and press the side plate 22 at three locations in the longitudinal direction. In the second state, the longitudinally central portion 50b, which is where the adjustment plate 50 is flexed laterally outward by the central protrusion 47a, and the two adjustment plate protrusions 50a are set to contact with and press the side plate 72.

Therefore, the flexible side walls 44, in the first state and the second state, locally contact with and press the side plate 72 at three locations in the longitudinal direction. Thus, for example, loosening of the clip 40 from the wiper arms 20 and 70 in the lateral direction is limited.

The above-described embodiment may be modified as follows. The above-described
embodiment and the following modifications can be combined as long as the combined modifications remain technically consistent with each other.

In the present embodiment, each flexible side wall 44 includes the operating portion 48, which projects downward from the side plate 22, in a state in which the clip is fixed to the wiper arms 20 and 70. This, however, is not a limitation. For example, the operating portion 48 may be omitted. In such a case, the flexible side wall 44 can be elastically deformed by using a jig or the like. Further, the operating portion 48 of the present embodiment may be shaped differently.

In the present embodiment, the flexible side wall 44 includes the inclined portion 46 that is inclined so that the clip width increases downward. This, however is not a limitation. For example, the inclined portion 46 may be omitted.

In the present embodiment, the joint 62 includes the deformation restricting portions 62b that restrict deformation of the flexible side walls 44. This, however is not a limitation. For example, the deformation restricting portions 62b may be omitted.

In the present embodiment, the fitting projection 43 includes the flexible tab 43a that contacts with and presses the inner wall surfaces of the through holes 24 and 74 in the longitudinal direction of the wiper arms 20 and 70. This, however is not a limitation. For example, the flexible tab 43a may be omitted.

Additionally, even if the fitting projection did not include the flexible tab 43a, the fitting projection is not elastically deformable in the vertical direction. Thus, the gap between the fitting projection and the inner wall surface of the through holes 24 and 74 may be relatively small. This limits loosening of the clip 40 relative to the wiper arms 20 and 70 in the longitudinal direction.

In the present embodiment, the flexible side walls 44 are set to contact with and press the corresponding side plates 22 and 72. This, however is not a limitation. For example, the width between the laterally outer surfaces of the two flexible side walls 44 may be the same as the width between the laterally inner surfaces of the two side plates 22 and 72. Moreover, for example, the width of the laterally outer surfaces of the two flexible side walls 44 may be slightly smaller than the width of the laterally inner surfaces of the two side plates 22 and 72.

In the present embodiment, the joint 62 is shaped so that its two sides in the longitudinal direction of the blade body 60 are symmetrical with respect to the pivot center of the clip 40. This, however, is not a limitation. For example, the joint 62 may include the deformation restricting portion 62b in only one side.

In the present embodiment, the flexible side wall 44 includes the flexible side wall base 47 and the adjustment plate 50, which are deformable to take the first state and the second state. This, however, is not a limitation. For example, the adjustment plate 50 may be omitted. In other words, the clip 40 may be fixed only to the wiper arm 20.

In the present embodiment, the clip 40 includes the pocket 51, which receives the adjustment plate 50 in the first state. This, however, is not a limitation. For example, the pocket 51 may be omitted. If the pocket 51 is omitted, for example, the adjustment plate 50 may be cut off when fixed to the wiper arm 20.

In the present embodiment, the clip 40 includes the first holding portion 54, which holds the adjustment plate 50 in position. This, however, is not a limitation. The first holding portion 54 may be omitted.

In the present embodiment, the clip 40 includes the second holding portion 55, which holds the adjustment plate 50 in position. This, however, is not a limitation. The second holding portion 55 may be omitted.

In the present embodiment, in the first state, the central protrusion 47a and the two end protrusions 47b are set to contact with and press the side plate 22. This, however, is not a limitation. For example, the flexible side wall 44 may be set to locally contact with and press the side plate 22 at two locations or at four or more locations. Further, the flexible side wall 44 may be set to contact with and press the side plate 22 over a single plane.

In the present embodiment, in the second state, the longitudinally central portion 50b, which is where the adjustment plate 50 is flexed laterally outward by the central protrusion 47a, and the two adjustment plate protrusions 50a are set to contact with and press the side plate 72. This, however, is not a limitation. For example, the flexible side wall 44 may be set to locally contact with and press the side plate 72 at two locations or four or more locations. Further, the flexible side wall 44 may be set to contact with and press the side plate 72 over a single plane.

In the present embodiment, the flexible side wall 44 is arranged at the basal end of the side wall 42 in the longitudinal direction. This, however, is not a limitation. For example, the flexible side wall 44 may be arranged at the distal end or the central part of the side wall 42 in the longitudinal direction.

In the present embodiment, the two flexible side walls 44 are arranged in the lateral direction of the clip 40. This, however, is not a limitation. For example, an elastically deformable flexible side wall may be arranged at only one side of the clip 40 in the lateral direction.

In the present embodiment, the shaft support 49 includes the shaft support groove 49a, and the joint 62 includes the shaft 62a fitted into the shaft support groove 49a. This, however, is not a limitation. For example, the shaft support 49 may include a shaft, and the joint 62 may include a shaft support groove.

The present invention has the features described below.
1. A wiper blade (30), including:
   a clip (40) fixed to a wiper arm (20, 70), where the wiper arm includes an upper plate (21, 71), a side plate (22, 72), a tab (23, 73), and a through hole (24, 74), the side plate extending downward from each of two lateral sides of the upper plate, the tab (23, 73) extending from a lower end of the side plate in a laterally inward direction, and the through hole (24, 74) extending through the upper plate, and
   a blade body (60) including a rubber blade (61) and a joint (62) that is fixed to the rubber blade and coupled to the clip in a pivotal manner, where the clip includes an upper wall (41), a side wall (42), a fitting projection (43), a flexible side wall (44), and an engaging portion (45, 53), the side wall (42) extending downward from each of two lateral sides of the upper wall, the fitting projection (43) projecting upward from the upper wall, being fitted into the through hole, and not being elastically deformable in a vertical direction, the flexible side wall (44) being arranged on at least one part of the side wall and being elastically deformable in a lateral direction, and the engaging portion (45, 53) being arranged on the flexible side wall and being engageable with an upper surface of the tab.
2. The wiper blade according to clause 1, where the flexible side wall includes an operating portion (48) that projects downward from the side plate.
3. The wiper blade according to clauses 1 or 2, where the flexible side wall includes an inclined portion (46) that is inclined to increase a clip width as the inclined portion extends downward.
4. The wiper blade according to any one of clauses 1 to 3, where the joint includes a deformation restricting portion (62b) , the deformation restricting portion restricting elastic deformation of the flexible side wall when a pivot angle relative to the clip is a wiping pivot angle corresponding to a non-lock-back state of the wiper arm, the deformation restricting portion allowing elastic deformation of the flexible side wall when the pivot angle relative to the clip is a non-wiping pivot angle excluded from a range of the wiping pivot angle.
5. The wiper blade according to any one of clauses 1 to 4, where the fitting projection includes a flexible tab (43a) that contacts with and presses an inner wall surface of the through hole in a longitudinal direction of the wiper arm.
6. The wiper blade according to any one of clauses 1 to 5, where the flexible side wall is set to contact with and press the side plate.
7. The wiper blade according to any one of clauses 1 to 6, where the joint has two sides in a longitudinal direction of the blade body, the two sides being symmetrical with respect to a pivot center of the clip
8. The wiper blade according to any one of clauses 1 to 7, where the flexible side wall includes a flexible side wall base (47) that defines a laterally outer wall surface of the flexible side wall in a first state, and an adjustment plate (50) arranged laterally outward from the flexible side wall base thereby defining the laterally outer wall surface of the flexible side wall in a second state.
9. The wiper blade according to clause 8, where the clip includes a pocket (51) that receives the adjustment plate in the first state.
10. The wiper blade according to clause 9, where the clip includes a first holding portion (54) that holds the adjustment plate in position in the first state.
11. The wiper blade according to any one of clauses 8 to 10, where the clip includes a second holding portion (55) that holds the adjustment plate in position in the second state.
12. The wiper blade according to any one of clauses 8 to 11, where the flexible side wall is set to contact with and press the side plate in each of the first state and the second state.
13. The wiper blade according to clause 12, where
   the adjustment plate is shorter in a longitudinal direction than the flexible side wall base and includes adjustment plate protrusions (50a) respectively protruding laterally outward from two longitudinal ends,
   the flexible side wall base includes a central protrusion (47a) and end protrusions (47b), the central protrusion (47a) protruding laterally outward at a position corresponding to a longitudinally central part of the adjustment plate, the end protrusions (47b) respectively protruding laterally outward from two longitudinal ends that does not overlap with the adjustment plate,
   in the first state, the central protrusion and the two end protrusions are set to contact with and press the side plate (22), and
   in the second state, a longitudinally central portion (50b) of the adjustment plate is flexed laterally outward by the central protrusion, and the longitudinally central portion and two of the adjustment plate protrusions are set to contact with and press the side plate (72).
14. A clip fixed to a wiper arm including an upper plate, a side plate extending downward from each of two lateral sides of the upper plate, a tab extending from a lower end of the side plate in a laterally inward direction, and a through hole extending through the upper plate, where the clip is coupled to a joint of a blade body in a pivotal manner, the clip including:
   an upper wall;
   a side wall that extends downward from each of the two lateral sides of the upper wall;
   a fitting projection projecting upward from the upper wall, being fitted into the through hole, and not being elastically deformable in a vertical direction;
   a flexible side wall being arranged on at least one part of the side wall and being elastically deformable in a lateral direction; and
   an engaging portion being arranged on the flexible side wall and being engageable with an upper surface of the tab.

### REFERENCE SIGNS LIST

20, 70) wiper arm; 21, 71) upper plate; 22, 72) side plate; 23, 73) tab; 24,74) through hole; 30) wiper blade; 40) clip; 41) upper wall; 42) side wall; 43) fitting projection; 43a) flexible tab; 44) flexible side wall; 45, 52) engaging portion; 46) inclined portion; 47) flexible side wall base; 47a) central protrusion; 47b) end protrusion; 48) operating portion; 50) adjustment plate; 50a) adjustment plate protrusion 50b) central portion; 51) pocket; 54) first holding portion; 55) second holding portion; 60) blade body; 61) rubber blade; 62) joint; 62b) deformation restricting portion

## Claims

1. A wiper blade (30), comprising:
a clip (40) fixed to a wiper arm (20, 70), wherein the wiper arm includes an upper plate (21, 71), a side plate (22, 72), a tab (23, 73), and a through hole (24, 74), the side plate extending downward from each of two lateral sides of the upper plate, the tab (23, 73) extending from a lower end of the side plate in a laterally inward direction, and the through hole (24, 74) extending through the upper plate; and
a blade body (60) including a rubber blade (61) and a joint (62) that is fixed to the rubber blade and coupled to the clip in a pivotal manner, wherein
the clip includes an upper wall (41), a side wall (42), a fitting projection (43), a flexible side wall (44), and an engaging portion (45, 53), the side wall (42) extending downward from each of two lateral sides of the upper wall, the fitting projection (43) projecting upward from the upper wall, being fitted into the through hole, and not being elastically deformable in a vertical direction, the flexible side wall (44) being arranged on at least one part of the side wall and being elastically deformable in a lateral direction, and the engaging portion (45, 53) being arranged on the flexible side wall and being engageable with an upper surface of the tab.

2. The wiper blade according to claim 1, wherein the flexible side wall includes an operating portion (48) that projects downward from the side plate.

3. The wiper blade according to claim 1 or 2, wherein the flexible side wall includes an inclined portion (46) that is inclined to increase a clip width as the inclined portion extends downward.

4. The wiper blade according to any one of claims 1 to 3, wherein the joint includes a deformation restricting portion (62b), the deformation restricting portion restricting elastic deformation of the flexible side wall when a pivot angle relative to the clip is a wiping pivot angle corresponding to a non-lock-back state of the wiper arm, the deformation restricting portion allowing elastic deformation of the flexible side wall when the pivot angle relative to the clip is a non-wiping pivot angle excluded from a range of the wiping pivot angle.

5. The wiper blade according to any one of claims 1 to 4, wherein the fitting projection includes a flexible tab (43a) that contacts with and presses an inner wall surface of the through hole in a longitudinal direction of the wiper arm.

6. The wiper blade according to any one of claims 1 to 5, wherein the flexible side wall is set to contact with and press the side plate.

7. The wiper blade according to any one of claims 1 to 6, wherein the joint has two sides in a longitudinal direction of the blade body, the two sides being symmetrical with respect to a pivot center of the clip.

8. The wiper blade according to any one of claims 1 to 7, wherein the flexible side wall includes a flexible side wall base (47) that defines a laterally outer wall surface of the flexible side wall in a first state, and an adjustment plate (50) arranged laterally outward from the flexible side wall base thereby defining the laterally outer wall surface of the flexible side wall in a second state.

9. The wiper blade according to claim 8, wherein the clip includes a pocket (51) that receives the adjustment plate in the first state.

10. The wiper blade according to claim 9, wherein the clip includes a first holding portion (54) that holds the adjustment plate in position in the first state.

11. The wiper blade according to any one of claims 8 to 10, wherein the clip includes a second holding portion (55) that holds the adjustment plate in position in the second state.

12. The wiper blade according to any one of claims 8 to 11, wherein the flexible side wall is set to contact with and press the side plate in each of the first state and the second state.

13. The wiper blade according to claim 12, wherein
the adjustment plate is shorter in a longitudinal direction than the flexible side wall base and includes adjustment plate protrusions (50a) respectively protruding laterally outward from two longitudinal ends,
the flexible side wall base includes a central protrusion (47a) and end protrusions (47b), the central protrusion (47a) protruding laterally outward at a position corresponding to a longitudinally central part of the adjustment plate, the end protrusions (47b) respectively protruding laterally outward from two longitudinal ends that does not overlap with the adjustment plate,
in the first state, the central protrusion and the two end protrusions are set to contact with and press the side plate (22), and
in the second state, a longitudinally central portion (50b) of the adjustment plate is flexed laterally outward by the central protrusion, and the longitudinally central portion and two of the adjustment plate protrusions are set to contact with and press the side plate (72).

14. A clip fixed to a wiper arm, wherein the wiper arm includes an upper plate, a side plate, a tab, and a through hole, the side plate extending downward from each of two lateral sides of the upper plate, the tab extending from a lower end of the side plate in a laterally inward direction, and a through hole extending through the upper plate, the clip being coupled to a joint of a blade body in a pivotal manner, the clip comprising:
an upper wall;
a side wall being one of the sides walls, the side walls respectively extending downward from two lateral sides of the upper wall;
a fitting projection projecting upward from the upper wall, being fitted into the through hole, and not being elastically deformable in a vertical direction;
a flexible side wall being arranged on at least one part of the side wall and being elastically deformable in a lateral direction; and
an engaging portion being arranged on the flexible side wall and being engageable with an upper surface of the tab.
